# EUROPÄISCHE PATENTSCHRIFT

(11) **EP 3 308 024 B1**
(45) Veröffentlichungstag und Bekanntmachung des Hinweises auf die Patenterteilung: **07.08.2019**
(21) Anmeldenummer: 16739396.6
(22) Anmeldetag: 09.06.2016
(51) Int. Cl.: F04C 2/107, F04C 15/00

(54) **KUPPLUNGSELEMENT FÜR EINEN EXZENTERSCHNECKENROTOR**
COUPLING ELEMENT FOR AN ECCENTRIC SCREW ROTOR
ÉLÉMENT DE RACCORDEMENT POUR UN ROTOR SOUS FORME DE VIS EXCENTRIQUE

(30) Priorität: 12.06.2015 DE 102015007567
(43) Veröffentlichungstag der Anmeldung: 18.04.2018
(73) Patentinhaber: NETZSCH Pumpen & Systeme GmbH, 95100 Selb (DE)
(72) Erfinder: TEKNEYAN, Mikael, 84559 Kraiburg (DE); NUEBL, Philipp, 83555 Gars Bahnhof (DE); WEIGL, Stefan, 84453 Mühldorf (DE); WEBER, Helmuth, 84359 Simbach (DE); ROSAM, Markus, 84544 Aschau (DE)
(74) Vertreter: Beyer, Andreas
(86) Internationale Anmeldenummer: PCT/DE2016/000239
(87) Internationale Veröffentlichungsnummer: WO 2016/198036

(56) Entgegenhaltungen:
- EP-A1- 2 669 522
- DE-A1- 10 116 641

## Beschreibung

Die Erfindung betrifft ein Kupplungselement für einen helixförmigen Exzenterschneckenpumpenrotor gemäß dem Oberbegriff des Patentanspruchs 1 sowie eine Rotoranschlussvorrichtung mit einem solchen Kupplungselement.

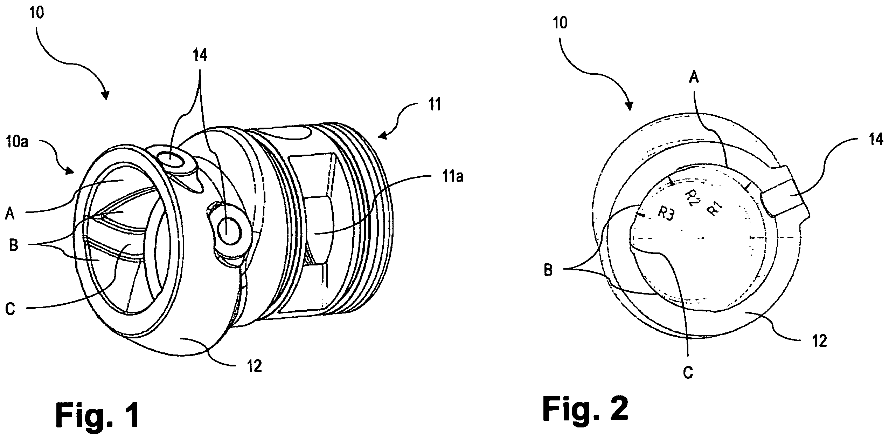

Aus den Dokumenten DE 101 16 641 A1 und DE 199 43 107 A1 ist ein Kupplungselement für einen helixförmigen Exzenterschneckenpumpenrotor gemäß dem Oberbegriff des Patentanspruchs 1 bekannt. Letzteres Dokument offenbart einen Rotor, dessen Helixform sich zu dem einen Ende derart verändert, dass dieses Ende von einem Kupplungselement aufgenommen werden kann. Das Kupplungselement hat zu diesem Zweck ein zum helixförmigen Profil des Wellenendes komplementäres Innenprofil. Auf diese Weise kommt eine Kopplung zwischen dem Rotorende und dem Kupplungselement mittels einer zum Rotorende ununterbrochenen komplementären Fläche zustande. Das Rotorende wird dabei so in das Kupplungselement geschraubt, dass es entlang der helixförmigen Innenwandfläche bis zum Anschlag hineingedreht und dabei entlang der helixförmigen Innenwandfläche des Kupplungselements geführt wird. Ein Zurück- bzw. Herausdrehen des Rotors wird mittels eines in Figur 1 gezeigten Querstifts verhindert, der an einem entgegengesetzten Ende des Rotors einen Rotoranschlag bildet.

Die Erfindung hat die Aufgabe, ein Kupplungselement für einen helixförmigen Exzenterschneckenpumpenrotor bereitzustellen, das einfach gefertigt werden kann.

Die Aufgabe ist erfindungsgemäß durch ein Kupplungselement gelöst, das die im Patentanspruch 1 genannten Merkmale aufweist. Hingewiesen sei an dieser Stelle darauf, dass die erfindungsgemäße Ausgestaltung des Rotoranschlussabschnitts auch an Kupplungselementen für Exzenterschneckenpumpenrotoren zum Einsatz kommen kann, die keinen Gelenkabschnitt zur Aufnahme eines Antriebswellenendes aufweisen. Jegliches Element, welches zur dreh- und lösbaren Kopplung eines Exzenterschneckenpumpenrotors mit einem weiteren Bauteil geeignet ist, kann zur Erreichung der im Folgenden näher ausgeführten Vorteile mit der erfindungsgemäßen Ausgestaltung eines Rotoranschlussabschnitts versehen sein.

Dadurch, dass der als Hohlzylinder ausgebildete Rotoranschlussabschnitt innen mindestens zwei zum Rotor komplementäre Innenumfangsflächen mit einem zur Querschnittsmitte des Hohlzylinders festgelegten Radius hat, braucht nicht die gesamte Innenumfangsfläche des Hohlzylinders fein bearbeitet werden, da das Rotorende beim Hineinschrauben nur mit den beiden Innenumfangsflächen in Kontakt kommt.

Erfindungsgemäß ist zwischen den Innenumfangsflächen mindestens ein Flächenabschnitt mit einem größeren Radius als dem Radius der Innenumfangsflächen vorhanden. Dabei ist der Flächenabschnitt bevorzugt stufenartig von den Innenumfangsflächen abgesetzt. Ein solcher Flächenabschnitt, der nicht zur Führung des Rotorendes dient, bietet eine größere Formtoleranz, wodurch das Kupplungselement durch Gießen hergestellt werden kann, ohne dass Nacharbeiten erforderlich sind.

Des Weiteren ist vorzugsweise der Radius der Innenumfangsflächen der kleinste Radius der Innenflächen des Hohlzylinders. Auf diese Weise kann sichergestellt werden, dass das Rotorende nur auf den Innenumfangsflächen aufliegt.

Von Vorteil ist darüber hinaus, dass die Innenumfangsflächen unterbrochen sind, so dass eine Materialeinsparung sowie großzügigere Fertigungstoleranzen erreicht werden können. Vorteilhafterweise werden dadurch noppenartige Innenumfangsflächen ausgebildet, die komplementär zum Rotor verlaufen und besonders einfach im Gussverfahren zu fertigen sind. Vorteilhaft ist dabei, wenn die Innenumfangsflächen auf jeweils drei Noppen reduziert sind.

Gemäß einer anderen vorteilhaften Weiterbildung ist mindestens eine radiale Bohrung im Mantel des Hohlzylinders zur Aufnahme eines Sicherungselements vorhanden. Auf diese Weise kann eine Radialsicherung eines im Hohlzylinder befindlichen Rotorendes geschaffen werden, die ein Herausdrehen des Rotorendes aus dem Hohlzylinder verhindert.

Dabei ist es insbesondere vorteilhaft, wenn sich die mindestens eine radiale Bohrung gegenüber von einem Flächenabschnitt mit vergrößertem Radius befindet, wodurch eine verbesserte radiale Sicherung erreicht wird, weil der Rotor gleichmäßig gegen die beiden Innenumfangsflächen gedrückt wird. Vorzugsweise sind mindestens zwei radiale Bohrungen vorhanden, welche zumindest axial und vorzugsweise auch entlang des Hohlzylindermantelumfangs voneinander beabstandet sind, wodurch eine weiter verbesserte radiale Sicherung durch unterschiedliche Angriffspunkte am Rotor erreicht wird. In diesem Zusammenhang ist vorteilhaft mindestens eine Madenschraube vorhanden, welche als Sicherungselement dient, das kostengünstig und zugleich platzsparend Im Hohlzylinder komplett versenkbar ist. Eine solche Madenschraube ist vorteilhafterweise eine Madenschraube mit Spitze, da Versuche gezeigt haben, dass eine Madenschraube mit Spitze bei einem Startstoppbetrieb eine Lockerung der Verbindung von Rotor und Kupplungselement zuverlässig unterbindet.

Eine weitere vorteilhafte Weiterbildung sieht vor, dass der Hohlzylinder längsgeteilt ausgebildet ist. Dadurch wird nicht nur ein axiales, sondern auch ein radiales Lösen des Rotorendes aus dem Kupplungselements ermöglicht.

Vorzugsweise ist der Hohlzylinder aus zwei Halbschalen ausgebildet, wodurch das Rotorende durch Klemmung befestigt werden kann. Dabei ist es vorteilhaft, dass die Halbschalen mit mindestens zwei Spannschrauben zusammengehalten werden, um eine ausreichend große Klemmkraft auf das Rotorende aufzubringen. Insbesondere vorteilhaft ist es, dass die Halbschalen von drei Spannschrauben zusammengehalten werden, da Versuche ergeben haben, dass drei Schrauben eine verbesserte Klemmkraft bereitstellen. Vorzugsweise ist in dem verspannten Zustand der Halbschalen ein Spalt zwischen den Halbschalen vorhanden, der zur Sicherstellung der notwendigen Klemmkraft dient.

Ferner ist das Kupplungselement vorteilhaft so weitergebildet, dass sein Gelenkabschnitt als Kardangelenkaufnahme ausgebildet ist. Dadurch kann das Kupplungselement als ein einziges Element und Verbindungsstück zwischen Rotor und Kardanwelle ausgebildet werden.

Eine vorteilhafte Gestaltung der Erfindung sieht vor, dass das Kupplungselement einstückig, vorzugsweise durch ein Feingussverfahren ohne Nachbearbeitung, hergestellt ist, was nicht nur wirtschaftlich, sondern auch dank der auf die Innenumfangsflächen beschränkten Kontaktflächen zum Rotor ausreichend genau ist. Mit anderen Worten, es sind großzügigere Toleranzen bei der Herstellung des Kupplungselements möglich.

Vorteilhafterweise hat der Rotoranschlussabschnitt eine stirnseitige Aussparung für ein Dichtelement, das ins Innere des Hohlzylinders hineinragen kann, um auf diese Weise in fluiddichtenden Kontakt mit einem in den Rotoranschlussabschnitt eingebrachten Rotorende treten zu können. Dabei ist von Vorteil, dass das Dichtelement ein O-Ring sein kann, der günstig in der Herstellung ist.

Die Erfindung betrifft auch eine Rotoranschlussvorrichtung, die einen Exzenterschneckenpumpenrotor und ein damit verbundenes Kupplungselement wie zuvor beschrieben umfasst.

Insbesondere weist eine solche Rotoranschlussvorrichtung einen Rotor auf, der eine über seine gesamte Länge gleichförmige Helixform hat. Auf diese Weise ist keine spezielle Bearbeitung des Rotorendes zur Aufnahme in das Kupplungselement mehr notwendig und ein fertiger Rotor einer gewünschten Länge kann als Stückware durch einfaches Zuschneiden langer Rotorstücke auf die gewünschte Länge hergestellt werden. Solche langen Rotorstücke haben beispielsweise eine Länge von 6m.

Eine vorteilhafte Rotoranschlussvorrichtung hat ein Rotorende mit mindestens einer umfangsseitigen, radialen Bohrung zur Aufnahme des Sicherungselements. Vorzugsweise ist diese Bohrung konisch ausgebildet. Eine solche Bohrung erleichtert die Sicherung des Rotorendes gegen ein Zurück- bzw. Herausdrehen.

Des Weiteren besteht eine vorteilhafte Weiterbildung der vorhergehenden Rotoranschlussvorrichtungen darin, dass das Rotorende nur auf den zumindest zwei Innenumfangsflächen des Kupplungselements aufliegt, d. h. in Umfangsrichtung nur mit diesen Innenumfangsflächen in Kontakt ist. Auf diese Weise sind großzügigere und damit kostensparende Toleranzen bei der Fertigung des Kupplungselements möglich.

### Eine weitere Rotoranschlussvorrichtung hat vorteilhafterweise eine Feder

Eine vorteilhafte Weiterbildung sieht vor, dass der Rotor mittels einer Federscheibe mit dem Kupplungselement verbunden ist. Vorzugsweise ist darüber hinaus das Rotorende mit einer Kerbe oder Rastbohrung versehen, in welche ein im Hohlzylinder angebrachter Schnapper eingeführt werden kann, wodurch ein schnelles und automatisches Sichern des Rotors im Kupplungselement erreicht wird. Alternativ kann das Rotorende 50a mittels einer exzentrisch zur Querschnittsmitte des Hohlzylinders von der Seite des Antriebswellenaufnahmeabschnitts durch die Trennwand beider Abschnitte verlaufenden Schraube gesichert werden. Auf diese Weise erfolgt die Sicherung versteckt und platzsparend. Des Weiteren ist es vorteilhaft, dass ein bis zum Anschlag in dem Hohlzylinder befindliches Rotorende eine radiale Aussparung an einer Position vor der Stirnseite des Hohlzylinders aufweist, in die ein Sicherungselement eingebracht ist, das zusätzlich mit der Stirnseite des Hohlzylinders verschraubt ist, wodurch eine einfache und gut zugängliche Sicherung des Rotors an dem Rotoranschlussabschnitt 10a erreicht wird.

Ausführungsbeispiele der Erfindung werden nachfolgend anhand schematischer Zeichnungen näher erläutert. Es zeigt:
- Fig. 1: ein erstes Ausführungsbeispiel eines erfindungsgemäßen Kupplungselements in räumlicher Darstellung,
- Fig. 2: einen Querschnitt durch das in Figur 1 gezeigte Kupplungselement in Höhe eines Hohlzylinders,
- Fig. 3: einen Rotor mit einem in das Kupplungselement des ersten Ausführungsbeispiels passenden Rotorende in einer seitlichen Ansicht,
- Fig. 4: die Schnitte A-A und B-B aus Figur 3,
- Fig. 5: eine Rotoranschlussvorrichtung mit einem Kupplungselement gemäß dem ersten Ausführungsbeispiel in einer seitlichen Ansicht,
- Fig. 6: die Schnitte C-C und D-D aus Figur 5,
- Fig. 7: die Rotoranschlussvorrichtung aus Figur 5 In einer räumlichen Explosionsansicht,
- Fig. 8: die Rotoranschlussvorrichtung aus Figur 5 in räumlicher Darstellung,
- Fig. 9: das Kupplungselement gemäß dem ersten Ausführungsbeispiel in einer räumlichen Darstellung, und
- Fig. 10: ein zweites Ausführungsbeispiel eines erfindungsgemäßen Kupplungselements in einer räumlichen Darstellung.

### Erstes Ausführungsbeispiel

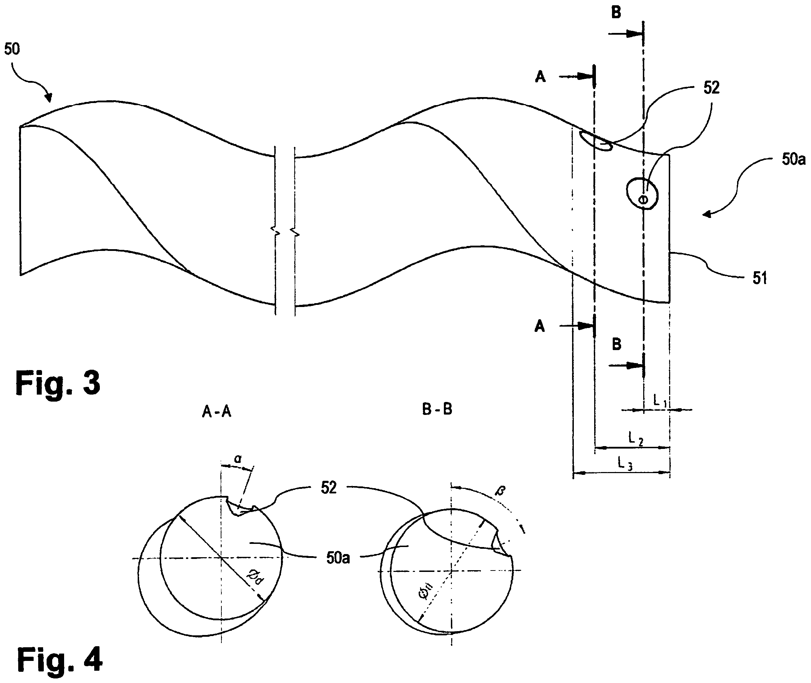

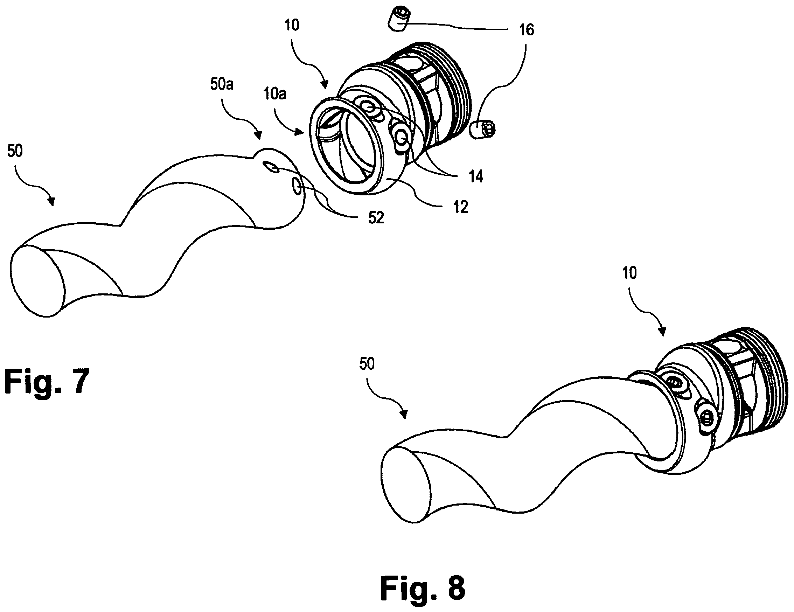

Die Fig. 1, 2 und 9 zeigen ein durch ein Feingussverfahren ohne Nachbearbeiten hergestelltes einstückiges Kupplungselement 10, das auf der linken Seite (Fig. 1) einen Rotoranschlussabschnitt 10a und auf der rechten Seite (Fig. 1) einen als Gelenkabschnitt ausgebildeten Antriebswellenaufnahmeabschnitt 11 aufweist, der hier als eine Kardangelenkaufnahme 11a ausgestaltet ist. Die Kardangelenkaufnahme 11a an sich ist aus dem Stand der Technik bekannt und wird deshalb nachfolgend nicht näher beschrieben. Der Rotoranschlussabschnitt 10a stellt einen der helixartig gewellten Form eines Exzenterschneckenpumpenrotors 50 (Fig. 3, 5, 7, 8) nachempfundenen Hohlzylinder 12 dar. Dieser Hohlzylinder 12 hat zwei nach innen vorstehende Innenumfangsflächen B, die einen zur Querschnittsmitte des Hohlzylinders 12 festgelegten Radius R2 (Fig. 2) haben. Diese Innenumfangsflächen B verlaufen in der Längsrichtung des Kupplungselements 10 helixförmig und bilden dadurch zwei zu einem passenden Rotor 50 komplementäre Innenumfangsflächen B aus. Die beiden Innenumfangsflächen B sind durch zwei stufenartig abgesetzte Flächenabschnitte A, C voneinander beabstandet, die einen größeren Innenradius R1, R3 (Fig. 2) als der Radius R2 der Innenumfangsflächen B haben. Folglich ist der Radius R2 der Innenumfangsflächen B nicht nur geringer als der Radius R1, R3 der restlichen Innenwandflächen innerhalb der Flächenabschnitte A, C, sondern auch der kleinste Radius aller Innenwandflächen des Hohlzylinders 12. Der Rotoranschlussabschnitt 10a kann darüber hinaus eine stirnseitige Aussparung für einen O-Ring (nicht gezeigt) haben, der Ins Innere des Hohlzylinders 12 hineinragt, um auf diese Weise in fluiddichtenden Kontakt mit einem in den Rotoranschlussabschnitt 10a eingebrachten Rotorende 50a (Fig. 3 und 7) treten zu können.

Das Kupplungselement 10 hat darüber hinaus zwei radiale, den Mantel des Hohlzylinders 12 durchsetzende Bohrungen 14 zur Aufnahme von spitzen Madenschrauben 16 (Fig. 7). Diese radialen Bohrungen 14 liegen im Wesentlichen gegenüber dem kleinsten Flächenabschnitt C, der zwischen den Innenumfangsflächen B für eine Unterbrechung sorgt, und sind hier in dem anderen Flächenabschnitt A zwischen den Innenumfangsflächen B angeordnet. Die Hohlzylinderbohrungen 14 sind zudem axial sowie entlang des Hohlzylindermantelumfangs voneinander beabstandet.

Die Fig. 2 zeigt den Radius R2 der Innenumfangsflächen B sowie die beiden jeweiligen Radien R1, R3 der Flächenabschnitte A, C. Obwohl der Innenradius R2 der Innenumfangsflächen B hier gleich gewählt ist, können die Innenumfangsflächen B auch unterschiedliche Radien haben. Letzteres ist im Wesentlichen von der Geometrie des aufzunehmenden Exzenterschneckenpumpenrotors 50 abhängig. In Fig. 2 ist des Weiteren zu erkennen, dass die Hohlzylinderbohrungen 14 im Mantel des Hohlzylinders 12 solchermaßen gegenüber dem kleinsten Flächenabschnitt C gelegen sind, dass der Rotor 50 mittels zweier Madenschrauben (Fig. 7), die in die Hohlzylinderbohrungen 14 geschraubt werden, gegen die Innenumfangsflächen B gedrückt werden kann, um so ein Zurück- bzw. Herausdrehen des Rotors 50 zu verhindern. Die großzügigeren Toleranzen bei der Fertigung des Kupplungselements 10 kommen dadurch zustande, dass der gegenüber den Innenumfangsflächen B liegende Flächenabschnitt A aufgrund seines größeren Radius R1 dem Rotorende 50a einen Toleranzspielraum lässt. So Ist dieser Toleranzspielraum ein Abstand zwischen dem in dem Hohlzylinder 12 eingebrachten Rotorende 50a und dem Flächenabschnitt A. Haben die Innenumfangsflächen B herstellungsbedingt einen geringeren Radius R2 als gefordert, so kann das Rotorende 50a aufgrund des Toleranzspielraums trotzdem in den Hohlzylinder 12 eingeführt werden, wobei es dann in der Darstellung der Fig. 2 nach rechts zum Flächenabschnitt A verlagert ist und den Toleranzspielraum ausnutzt.

Die Fig. 3 und 4 zeigen jeweils das Rotorende 50a, das sich nur darin vom Rest des Rotors 50 unterscheidet, dass zwei umfangsseitige, konische Bohrungen 52 zur Aufnahme der spitzen Madenschrauben 16 vorhanden sind. Diese Bohrungen 52 weisen axiale Abstände L₁, L₂ von einer Rotorendfläche 51 auf (Fig. 3) und sind in Umfangsrichtung um Winkel α und β zu einer mittigen, vertikalen Querschnittsachse versetzt (Fig. 4). Eine weitere Möglichkeit besteht darin, das Rotorende 50a mittels einer Federscheibe (nicht gezeigt) mit dem Kupplungselement zu verbinden. Alternativ kann das Rotorende 50a eine Kerbe oder Rastbohrung (nicht gezeigt) aufweisen, in welche ein im Hohlzylinder 12 angebrachter Schnapper anstelle der Madenschrauben 16 eingeführt werden kann. Alternativ kann das Rotorende 50a mittels einer exzentrisch zur Querschnittsmitte des Hohlzylinders 12 von der Seite des Antriebswellenaufnahmeabschnitts 11 durch die Trennwand beider Abschnitte 10a, 11 verlaufenden Schraube (nicht gezeigt) gesichert werden. Des Weiteren ist es möglich, dass ein bis zum Anschlag in dem Hohlzylinder 12 befindliches Rotorende 50a eine radiale Aussparung (nicht gezeigt) an einer Position vor der Stirnseite des Hohlzylinders 12 aufweist, in die ein Sicherungselement (nicht gezeigt) eingebracht ist, das zusätzlich mit der Stirnseite des Hohlzylinders 12 verschraubt ist. Dieses Sicherungselement kann U-förmig sein und mit seinen beiden Schenkeln durch komplementäre umfangsseitige Aussparungen am Rotorende 50a geführt sein und zusätzlich an beiden Schenkeln und dem Verbindungssteg mit der Stirnseite des Hohlzylinders 12 verschraubt sein, so dass der Rotor 50 axial gesichert ist. Alternativ kann nur eine mittige Bohrung (nicht gezeigt) durch das Rotorende 50a an derselben Position vorhanden sein, durch die ein Sicherungsbolzen radial herausragt und mit der Stirnseite des Hohlzylinders 12 verschraubt ist.

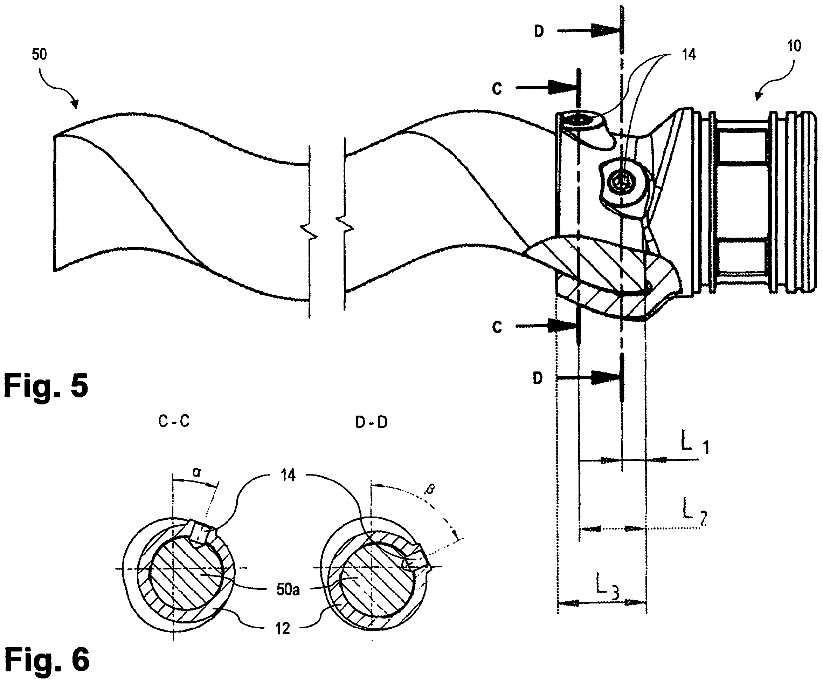

Die Fig. 5 und 6 zeigen das auf dem Rotorende 50a aus Fig. 3 und 4 montierte Kupplungselement 10 aus Fig. 1 und lassen erkennen, dass die Hohlzylinderbohrungen 14 in dem Hohlzylinder 12 mit den Bohrungen 52 bei der Montage so in Überdeckung gebracht werden, dass die spitzen Madenschrauben 16 beide Teile 10, 50 miteinander drehfest sichern können. Die Abstände L₁, L₂ sind auch hier gezeigt, wobei ein weiterer Abstand L₃ die Aufnahmetiefe des Rotorendes 50a in dem Hohlzylinder 12 bezeichnet.

Die Fig. 7 und 8 zeigen eine erfindungsgemäße Rotoranschlussvorrichtung mit einem erfindungsgemäßen Kupplungselement 10, einem Rotor 50 und Madenschrauben 16 in einem demontierten (Fig. 7) sowie in einem montierten (Fig. 8) Zustand. Dabei wird ausgehend von der Fig. 7 der Rotor 50 in den Hohlzylinder 12 des Rotoranschlussabschnitts 10a des Kupplungselements 10 hineingeschraubt. Erst wenn die Bohrungen 52 koaxial zu den Hohlzylinderbohrungen 14 liegen werden die Madenschrauben 16 vollständig versenkt, um die fertig montierte Rotoranschlussvorrichtung (Fig. 8) zu ergeben.

### Zweites Ausführungsbeispiel

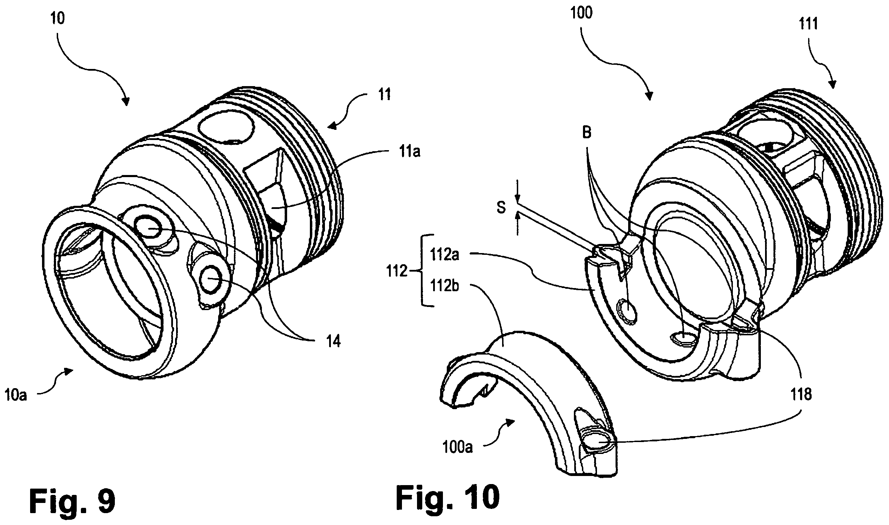

Die Fig. 10 zeigt in Gegenüberstellung zu dem in Fig. 9 gezeigten Kupplungselement 10 ein zweites Ausführungsbeispiel eines Kupplungselements 100 gemäß der Erfindung. Das Kupplungselement 100 in Fig. 10 hat einen Rotoranschlussabschnitt 100a sowie eine Kardangelenkaufnahme lila, die sich von der des ersten Ausführungsbeispiels nicht unterscheidet. Der Rotoranschlussabschnitt 100a hat einen Hohlzylinder 112, der mittels zweier Halbschalen 112a, 112b längsgeteilt ausgebildet ist, wobei die eine Halbschale 112a mit dem Kupplungselement 100 einstückig ist, während die andere Halbschale 112b an der ersten Halbschale 112a mittels Spannschrauben (nicht gezeigt) angebracht werden kann. Zu diesem Zweck sind an beiden Enden jeder Halbschale 112a, 112b zylindrische Aufnahmen 118 vorhanden. Sobald die Halbschalen 112a, 112b ein Rotorende 50a (nicht gezeigt) umschließen, werden ihre jeweiligen Aufnahmen 118 in fluchtende Überdeckung gebracht, so dass die Spannschrauben hindurchgeführt werden können, um so dass Rotorende 50a zwischen sich drehfest einzuklemmen. Dabei bleibt ein Spalt S zwischen beiden Halbschalen 112a, 112b bestehen, der die erforderliche Klemmkraft ermöglicht. Die Spannkraft ist dabei so groß, dass ein Herausdrehen des Rotorendes 50a aufgrund des Reibschlusses zwischen Rotorende 50a und den Innenumfangsflächen B der Halbschalen 112a, 112b verhindert wird. Die Innenumfangsflächen B sind in diesem Ausführungsbeispiel unterbrochen, so dass sie noppenartige Innenumfangsflächen B ausbilden, die komplementär zum Rotor (nicht gezeigt) verlaufen, wobei jede Innenumfangsfläche B auf jeweils drei Noppen B reduziert ist. Derartig zu einem Rotor komplementär ausgerichtete Noppen B können auch die Innenumfangsflächen B des ersten Ausführungsbeispiels ersetzen.

## Patentansprüche

1. Kupplungselement (10, 100) zur Verbindung eines helixförmigen Exzenterschneckenpumpenrotors (50) mit einer Antriebswelle, mit einem Antriebswellenaufnahmeabschnitt (11) und einem entgegengesetzt angeordneten Rotoranschlussabschnitt (10a), der als Hohlzylinder (12, 112) zur Aufnahme eines Rotorendes (50a) ausgebildet ist, wobei
der Hohlzylinder (12, 112) mindestens zwei zum Rotor (50) komplementäre Innenumfangsflächen (B) mit einem zur Querschnittsmitte des Hohlzylinders (12, 112) festgelegten Radius (R2) hat,
**dadurch gekennzeichnet, dass** zwischen den Innenumfangsflächen (B) mindestens ein Flächenabschnitt (A, C) mit einem größerem Innenradius (R1, R3) als dem Radius (R2) vorhanden ist.

2. Kupplungselement (10, 100) nach Anspruch 1,
**dadurch gekennzeichnet, dass** der Radius (R2) der Innenumfangsflächen (B) der kleinste Radius der inneren Flächen des Hohlzylinders (12, 112) ist.

3. Kupplungselement (10) nach einem der Ansprüche 1 oder 2,
**dadurch gekennzeichnet, dass** mindestens eine radiale Bohrung (14) im Mantel des Hohlzylinders (12) zur Aufnahme eines Sicherungselements (16) vorhanden ist.

4. Kupplungselement (100) nach einem der Ansprüche 1 oder 2,
**dadurch gekennzeichnet, dass** der Hohlzylinder (112) längsgeteilt ist.

5. Kupplungselement (10, 100) nach einem der vorhergehenden Ansprüche,
**dadurch gekennzeichnet, dass** sein Antriebswellenaufnahmeabschnitt (11) als Kardangelenkaufnahme (11a, 111a) ausgebildet ist.

6. Kupplungselement (10, 100) nach einem der vorhergehenden Ansprüche,
**dadurch gekennzeichnet, dass** es durch ein Feingussverfahren ohne Nachbearbeitung hergestellt ist.

7. Rotoranschlussvorrichtung, umfassend einen Exzenterschneckenpumpenrotor (50) und ein damit verbundenes Kupplungselement (10, 100) nach einem der vorhergehenden Ansprüche.

8. Rotoranschlussvorrichtung nach Anspruch 7,
**dadurch gekennzeichnet, dass** eine Helixform des Rotors (50) über seine gesamte Länge gleichförmig ist.

9. Rotoranschlussvorrichtung nach Anspruch 7 oder 8,
**dadurch gekennzeichnet, dass** das Rotorende (50a) nur auf den Innenumfangsflächen (B) des Kupplungselements (10, 100) aufliegt.

## Claims

1. A coupling element (10, 100) for connecting a helical eccentric screw pump rotor (50) to a drive shaft, comprising a drive shaft receiving section (11) and a rotor connecting section (10a), situated opposite therefrom, that is designed as a hollow cylinder (12, 112) for accommodating a rotor end (50a), wherein
the hollow cylinder (12, 112) has at least two inner circumferential surfaces (B) that are complementary to the rotor (50) and that have a radius (R2) which is fixed with respect to the cross-sectional center of the hollow cylinder (12, 112),
**characterized in that** at least one surface section (A, C) having a larger inner radius (R1, R3) than the radius (R2) is present between the inner circumferential surfaces (B).

2. The coupling element (10, 100) according to Claim 1,
**characterized in that** the radius (R2) of the inner circumferential surfaces (B) is the smallest radius of the inner surfaces of the hollow cylinder (12, 112).

3. The coupling element (10) according to one of Claims 1 or 2,
**characterized in that** at least one radial bore (14) is provided in the casing of the hollow cylinder (12) for accommodating a securing element (16).

4. The coupling element (10) according to one of Claims 1 or 2,
**characterized in that** the hollow cylinder (112) is divided in the longitudinal direction.

5. The coupling element (10, 100) according to one of the preceding claims,
**characterized in that** its drive shaft receiving section (11) is designed as a cardan joint receptacle (11a, 111a).

6. The coupling element (10, 100) according to one of the preceding claims,
**characterized in that** it is produced by a precision casting process without reworking.

7. A rotor connecting device, comprising an eccentric screw pump rotor (50) and a coupling element (10, 100) according to one of the preceding claims connected thereto.

8. The rotor connecting device according to Claim 7,
**characterized in that** a helical shape of the rotor (50) is uniform over its entire length.

9. The rotor connecting device according to Claim 7 or 8,
**characterized in that** the rotor end (50a) rests only on the inner circumferential surfaces (B) of the coupling element (10, 100).

## Revendications

1. Élément de raccordement (10, 100) destiné à raccorder un rotor (50) de pompe à cavité progressive hélicoïdale à un arbre d'entraînement, au moyen d'une section (11) de logement d'arbre d'entraînement et une section (10a) de raccord de rotor disposé en regard, qui est conçue comme un cylindre creux (12, 122) pour loger une extrémité de rotor (50a),
le cylindre creux (12, 112) ayant au moins deux surfaces périphériques (B) intérieures complémentaires dont le rayon (R2) fixé par rapport au centre en section transversale du cylindre creux (12, 122),
**caractérisé en ce qu'**entre les surfaces périphériques intérieures (B) se trouve au moins une section de surface (A, C) ayant un rayon interne supérieur (R1, R3) au rayon (R2).

2. Élément de raccordement (10, 100) selon la revendication 1,
**caractérisé en ce que** le rayon (R2) des surfaces périphériques intérieures (B) est le plus petit rayon des surfaces intérieures du cylindre creux (12, 122).

3. Élément de raccordement (10, 100) selon l'une des revendications 1 ou 2,
**caractérisé en ce qu'**au moins un trou radial (14) est ménagé dans l'enveloppe du cylindre creux (12) pour loger un élément de fixation (16).

4. Élément de raccordement (10, 100) selon l'une des revendications 1 ou 2,
**caractérisé en ce que** le cylindre creux (12) est divisé sur la longueur.

5. Élément de raccordement (10, 100) selon l'une quelconque des revendications précédentes, **caractérisé en ce que** sa section de logement d'arbre d'entraînement (11) est conçue comme un logement d'accouplement à cardan (11A, 111a).

6. Élément de raccordement (10, 100) selon l'une quelconque des revendications précédentes, **caractérisé en ce qu'**il est fabriqué selon un procédé de coulée de précision sans usinage de finition.

7. Dispositif formant raccord de rotor, comprenant un rotor de pompe à cavité progressive hélicoïdale (50) et un élément de raccordement (10, 100) y étant relié selon l'une des revendications précédentes.

8. Dispositif formant raccord de rotor selon la revendication 7,
**caractérisé en ce qu'**une forme hélicoïdale du rotor (50) est identique sur toute sa longueur.

9. Dispositif formant raccord de rotor selon la revendication 7 ou 8,
**caractérisé en ce que** l'extrémité de rotor (50a) se repose uniquement sur la surface périphérique intérieure (B) de l'élément de raccordement (10, 100).
